# EUROPEAN PATENT APPLICATION

(11) **EP 3 780 042 A1**
(43) Date of publication of application: **17.02.2021**
(21) Application number: 19775430.2
(22) Date of filing: 18.03.2019
(51) Int. Cl.: H01G 2/02, H01G 11/10, H01G 11/82, H01M 2/10

(54) **POWER STORAGE DEVICE MODULE AND POWER STORAGE DEVICE HOLDER**

(30) Priority: 30.03.2018 JP 2018068444
(71) Applicant: Nippon Chemi-Con Corporation, Tokyo 141-8605 (JP)
(72) Inventor: IDEUE, Takashi, Tokyo 141-8605 (JP); OHARA, Hitoshi, Tokyo 141-8605 (JP); YAMAYA, Koji, Tokyo 141-8605 (JP); SASAKI, Michihiro, Tokyo 141-8605 (JP)
(74) Representative: Baronetzky, Klaus
(86) International application number: PCT/JP2019/011154
(87) International publication number: WO 2019/188493

(57) **Abstract**

An object thereof is to provide an electricity storage device module andanelectricity storage device holderor the like having improved impactresistance, vibration resistance and heat dissipation characteristics. A resin storage unit for the electricity storage device housing unit and the resin to be storedin the electricity storage device is disposed is provided adjacent, and a resin storage unit and the electricity storage device housing unit, the electricity storage device holder, **characterized in that** spatially connected via a through hole. Preferably, the electricity storage device storage section shall be disposed between opposing resin storage sections.

## Description

### [Technical Field]

The present invention relates to an electricity storage device module and an electricity storage device holder or the like having improved impact resistance and vibration resistance and heat dissipation characteristics.

### [BACKGROUND ART]

As a technique relating to a capacitor module constituted by mounting a plurality of capacitors widely used in automotive applications or the like on a wiring board, the conventional capacitor module, after fitting a pair of leads of the capacitor into the mounting hole provided in the wiring board, the wiring circuit and the electrical connection provided on the wiring board by soldering on the back side, a plurality of capacitors configuration for mounting on a single wiring board is known.

Then, in such a conventional capacitor module, since it is intended to be used by attaching such a capacitor module to the device to be used through a hole for mounting provided in the wiring board, the wiring board for the mass of the plurality of capacitors is applied to all one wiring board depending on the mounting state or deformed by distortion, also, the mounting hole and the wiring board body of the wiring board is cracked or when the vibration is applied particularly by the use situation, or there is a problem that cracks in the soldered portion which is electrically connected to the wiring circuit provided with a pair of leads of the capacitor to the wiring board.

As a proposal of a means for solving such a problem, in the following Patent Document 1, there is no heavy load is applied to the wiring board, the explosion-proof valve is operated to provide a highly reliable capacitor module that does not cause a short-circuit failure is described.

According to this document, a mounting plate in which a plurality of recesses are provided on the upper surface, and a plurality of capacitors at least a portion is held in the recess of the mounting plate, the lead wire drawn from the capacitor is made of a wiring board electrically connected respectively, the mounting plate and the wiring board is disposed in a direction opposite to each other through a capacitor, the mounting plate is of a configuration so as to be attached to the device to be used through, thereby, the weight of the plurality of capacitors is made to be supported by all mounting plates breakage of the wiring board so as not to be applied any heavy load to the wiring board, it is assumed to have an effect that it is possible to provide a highly reliable capacitor module.

### [Prior art documents]

### [Patent Document]

[Patent Document 1] JP-A-2003-282361

### [SUMMARY OF THE INVENTION]

### [Problem to be solved by the invention]

Electricity storage device module used in automotive applications and the like, high vibration resistance is required. As in the prior art, in the electricity storage device module for holding simply sandwiching the barrel portion of the electricity storage device in a holder provided with a plurality of storage tubular portions a plurality of electricity storage devices, connected to the element of the electricity storage device when subjected to strong vibrations or impacts lead terminal is susceptible to failure occurs. Further, even if provided with a rib or slit of the conventional configuration to the housing cylindrical portion temporarily, the fixing force is not sufficient, the effect is limited. Further, although the means for fixing the electricity storage device to fill the resin in the housing tubular portion is known, and deviation of the resin in the housing tubular portion, there is a problem such as difficult adjustment of the viscosity of the resin reliability is not high.

The present invention has been made in view of the above problems, and an object thereof is to provide an electricity storage device module and an electricity storage device holder or the like having improved impact resistance and vibration resistance and heat dissipation characteristics.

### [Method for solving the problem]

Electricity storage device holder of the present invention, and a resin storage unit for the electricity storage device housing unit and the resin to be stored electricity storage device is disposed, provided adjacent, the resin storage unit and the electricity storage device housing unit, is spatially connected through the through hole characterized in that it is.

Further, the electricity storage device holder of the present invention, preferably the electricity storage device housing unit, shall be disposed between the resin housing portion facing, more preferably a plurality of electricity storage device housing unit around the resin housing portion is provided.

### [Effect of the Invention]

It is possible to provide an electricity storage device module and an electricity storage device holder or the like with improved impact resistance, vibration resistance and heat dissipation characteristics.

### [BRIEF DESCRIPTION OF THE DRAWINGS]

[Fig. 1] A plurality of electricity storage device is a perspective view illustrating a state of observing the electricity storage device module mounted on the electricity storage device holder from an oblique.
[Fig. 2] It is a diagram for explaining by observing the configuration of only the electricity storage device holder in a state of removing the electricity storage device from diagonally upward.
[Fig. 3] It is a schematic diagram for explaining by observing the electricity storage device module in a state of releasing the mounting for a part of the electricity storage device from the lead terminal side (bottom side).
[Fig. 4] It is a schematic diagram for explaining by observing the electricity storage device module in a state of releasing the mounting for a part of the electricity storage device from the lead terminal side (bottom side).
[Fig. 5] It is a schematic diagram illustrating a state of releasing the mounting of the electricity storage device module for a part of the electricity storage device by perspective observation from the lead terminal side (bottom side).
[Fig. 6] It is a plan view for explaining the ribs contributing to the structural strength strengthening of the electricity storage device holder while guiding the arrangement of the resin at the time of resin filling to the resin filling recess.
[Fig. 7] It is a diagram illustrating a state of observing the bottom side (lead terminal side) from obliquely downward in order to explain the outline of the lower space formed with the arrangement state of the electricity storage device.
[Fig. 8] It is a diagram illustrating a state of observing the bottom side (lead terminal side) from obliquely downward in order to explain the outline of the lower space formed with the arrangement state of the electricity storage device.
[Fig. 9] It is a perspective view for explaining an enlarged resin filling recess, the electricity storage device and the resin is not shown in the drawings of only the electricity storage device holder.

### [Forms for implementing the present invention]

Electricity storage device holder described in this embodiment, a housing portion for holding and mounting the head periphery of the plurality of electricity storage devices, a resin housing portion for storing the resin, a holder having each, the resin filled in the resin housing portion is in close contact with the electricity storage device infiltrates from the slit provided on the side wall. Thus, the electricity storage device module holder and the electricity storage device is firmly fixed is intended to be realized. Furthermore, by providing a plurality of electricity storage device housing unit around the resin housing portion, a resin disposed in the resin housing portion of one place, it is possible to fix a plurality of electricity storage devices.

Further, the storage unit of the electricity storage device of the present embodiment is not intended to close the electricity storage device head periphery as a cylindrical, it is possible to fix the side surface 4 locations and the holder near the head of the electricity storage device with a resin through the slit, it is possible to miniaturize the electricity storage device module can be mounted in a high density.

Further, the electricity storage device disposed in the storage portion of the holder, since it will be sandwiched only in the vicinity of the peripheral side head of the electricity storage device at four locations, the holder is exposed without contact in the vicinity of the side center portion of generally the electricity storage device generates the most heat. Thus, it can be expected that the heat dissipation effect without inhibiting the heat circulation by air cooling of the heat generating portion is improved.

Further, the electricity storage device holder described in this embodiment, it is possible to arrange the electricity storage device to align each line in the x-axis direction and the y-axis direction, respectively in the x-axis direction and the y-axis direction the passage of air between each line in each direction is ensured it can be expected that the heat dissipation effect is improved from.

Further, the electricity storage device holder described in this embodiment can be further firmly fixed and implemented by using, for example, an adhesive as a resin. Then, preferably the holder upper, in the obliquely 45 ° orientation direction to the x-axis and y-axis electricity storage device is arranged, a plurality of ribs of curved shape is provided in the obliquely curved line shape. This rib not only improves the durability and strength of the electricity storage device holder, by performing the function of the wall so that the resin does not leak to the electricity storage device head during resin filling, reliable filling operation of the resin can be performed more easily. The height of the wall by the rib can be a predetermined height to the extent that the resin is not diffused to the periphery at the time of resin filling. In the case of capacitors, for example, it is also feared that the adhesion of resin to the top of the head of the capacitor will interfere with the operation of the safety valve, but such concerns can be eliminated.

In addition, it is possible to fix the safety valve provided at the top of the head of the electricity storage device and the sealing rubber portion at the root of the lead terminal by the holder and resin without covering it with resin. Therefore, without inhibiting the discharge of gas through the sealing rubber portion with the change with time of the electricity storage device without inhibiting the operation of the safety valve, a large number of electricity storage devices without adversely affecting the life and reliability of the electricity storage device it is possible to mount and hold in a high density. Therefore, it will be described in more detail with reference to the accompanying drawings.

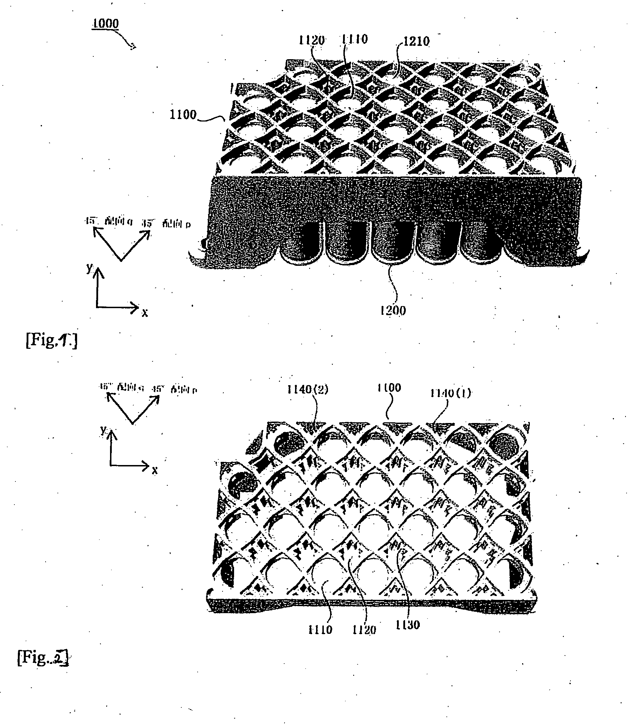

FIG. 1 is a perspective view illustrating a state in which a plurality of electricity storage devices 1200 are observed obliquely from an electricity storage device module 1000 mounted on an electricity storage device holder 1100. In FIG. 1, the electricity storage device 1200 is housed in the electricity storage device housing unit 1110 of the electricity storage device holder 1100 with its head top 1210 exposed. The electricity storage device 1200 may typically be a capacitor.

As shown in FIG. 1, the electricity storage device housing unit 1110 and the electricity storage device 1200 are sequentially and orderly arranged in a state of forming lines in each of the x-axis direction and the y-axis direction in the drawing. Normally when arranging the electricity storage device 1200 which is often a cylindrical shape as shown in FIG. 1, but becomes what approximately rhombic gap surrounded by the electricity storage device 1200 is formed, the space corresponding to the gap, the resin filling recess 1120 is provided.

Therefore, as can be understood from FIG. 1, in the oblique direction shown as p-direction and q-direction in the figure oriented obliquely 45 ° with respect to the x-axis direction and y-axis direction, the electricity storage device 1200 and the resin filling recess 1120 is intended to be arranged alternately.

Furthermore, as can be understood from FIG. 1, if attention is paid to one of the electricity storage device 1200, will be four resin filling recess 1120 is disposed adjacent to the periphery, the four resin filling recess 1120 each one wall and the one electricity storage device 1200 is in contact with it is intended to be temporarily held. That is, each electricity storage device 1200 is in contact with the nearest wall total four of the walls forming the four resin filling recesses 1120 disposed adjacent to the periphery thereof, respectively, is temporarily held at four surrounding side walls of the head top 1210.

Further, FIG. 2 is a diagram illustrating a configuration of only the electricity storage device holder 1100 in a state in which the electricity storage device 1200 is removed by observing from diagonally upward. As shown in FIG. 2, the four corners of the electricity storage device holder 1100 is provided with screw holes for screwing, but is configured to be screwed to the circuit board or the like is not limited thereto.

2, although a plurality of electricity storage device housing unit 1110 are arranged in a line shape respectively in the x-axis direction and the y-axis direction, the electricity storage device housing unit 1110, the resin filling recess 1120 formed in the gap it is also possible to explain that is formed consequently by.

That is, as can be understood from FIG. 2, the resin filling recess 1120 is formed in a substantially rectangular prism of the upper surface is opened to fill the resin and adhesive from its upper portion. Then, by one of the four sides forming the resin filling recess 1120, and can be understood that the electricity storage device housing unit 1110 in the center by the resin filling recess 1120 is arranged in four square shapes are configured.

Further, as shown in FIG. 2, the four side walls constituting the resin filling recess 1120, through holes 1130 for each filled resin is in contact with the electricity storage device 1200 is provided. In FIG. 2, the through hole 1130 is not intended to be limited to this has a slit shape of vertically elongated, it can be a through hole 1130 of an arbitrary shape. Further, in FIG. 2, although all four side walls constituting the resin filling recess 1120 has been described as comprising a through hole 1130 of each elongated slit shape, it can also be configured to provide a through hole 1130 only in any predetermined side wall.

Further, in FIG. 2, the outer surface of the four side walls constituting the resin filling recess 1120, i.e., the outer surface in contact with the electricity storage device 1200, respectively cylindrical although the side wall curved so as to fit around the electricity storage device 1200 is not limited to this shape, it may be any shape. By a curved sidewall so as to fit around the electricity storage device 1200 as shown in FIG. 2, it is possible to contact the electricity storage device 1200 in a safer and reliably large area, not only the temporary fixing is facilitated, it is easy to provide a vertically elongated slit-shaped through hole 1130. Furthermore, the vertically elongated slit-shaped through hole 1130, since it is possible to form a resin contact portion stretched in the height direction above the peripheral wall of the electricity storage device 1200, and can be formed in four surrounding locations, it is possible to reliably fixed mounting, it becomes possible to improve the vibration resistance and impact resistance can be expected.

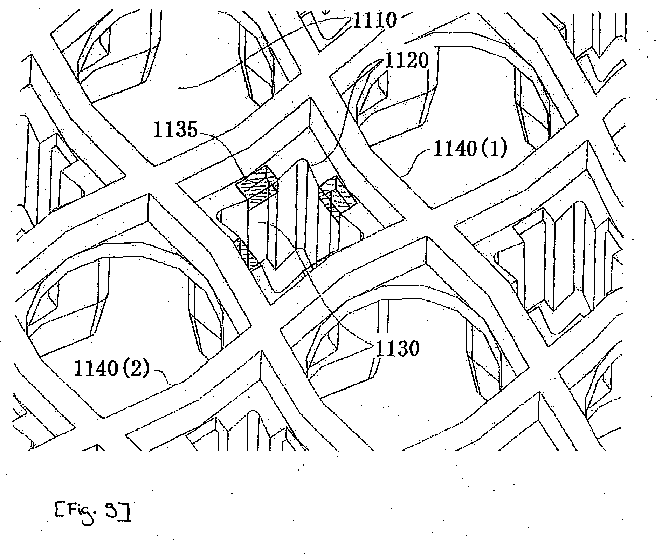

Here, FIG. 9 is a perspective view illustrating an enlarged resin filling recess 1120, the electricity storage device 1200 and the resin is not shown a diagram of only the electricity storage device holder 1100. Electricity storage device holder 1100, the portion represented by hatching as shown in FIG. 9 (portion corresponding to the upper portion of the through hole 1130) is an open space, it is more preferably a notch 1135. It should be noted that the hatching is a marking to indicate the location and does not indicate the presence of any material or material therein. That is, as the configuration of the electricity storage device holder 1100, the hatched portion shown in FIG. 9, it is further preferable that the constituent materials or the like are not present at all. By thus providing the notch 1135 in the upper portion of the through hole 1130, the resin filling is facilitated, also when inserting the electricity storage device 1200 in the electricity storage device holder 1100, the mounting condition of the electricity storage device 1200 through the through hole 1130 from the head top 1210 side easily visually recognized.

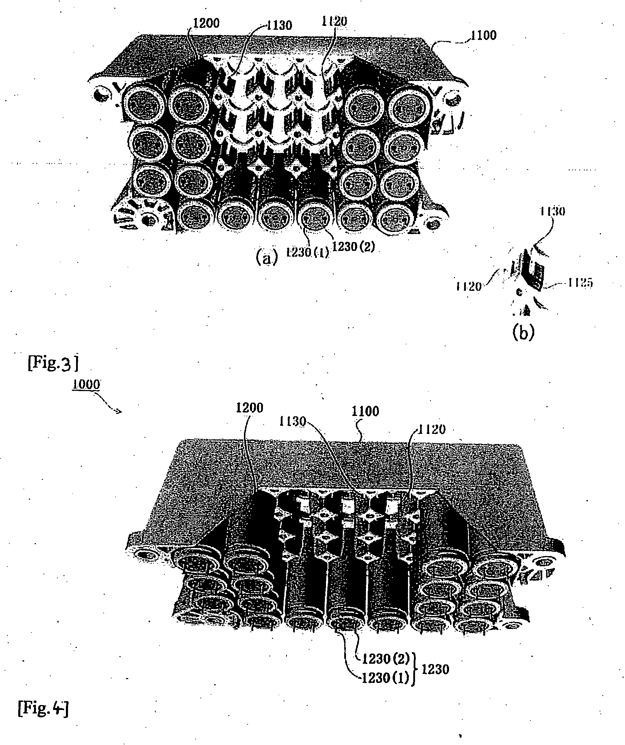

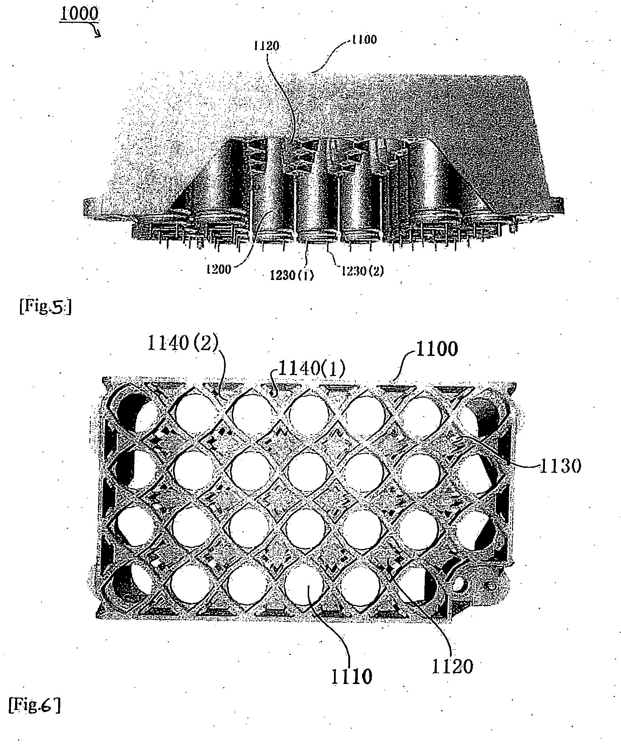

3 and 4, the electricity storage device module 1000 in a state of releasing the mounting for some of the electricity storage device 1200 is a schematic diagram for explaining by observing from the lead terminal 1230 (1), 1230 (2) side (bottom side). Further, FIG. 5 is a schematic view illustrating a state of releasing the mounting of the electricity storage device module 1000 for a part of the electricity storage device 1200 by perspective observation from the lead terminals 1230 (1), 1230 (2) side (bottom side). Lead terminals 1230 (1), 1230 (2) are collectively referred to as appropriate lead terminals 1230 in the following. Further, the guide portion 1125 which is marked with a thick line surrounded by FIG. 3 (b) has a tapered shape that extends downward, there is a role of inserting and guiding the electricity storage device 1200 upward. Further, the slit-shaped through hole 1130 provided in the resin filling recess 1120 is not extended to the region of the guide portion 1125. If the through hole 1130 to the region of the guide portion 1125 is stretched, and the electricity storage device 1200, a through hole 1130 which is extended to the guide portion 1125, a gap will occur between (the guide portion 1125 is tapered), leakage of the resin is feared to occur.

In FIGS. 3 to 5, the lead terminal 1230 may be intended to be supplied or supplied with electricity is soldered to a circuit board or the like (not shown), the electricity storage device holder 1100 to the circuit board (not shown) may be those to be fixedly mounted such as screwed.

Then, as can be understood from FIGS. 3 to 5, the outer surface of the four side walls constituting the resin filling recess 1120 is not intended to completely fit (surface contact) to the cylindrical side surface of the electricity storage device 1200, in the longitudinal direction at the edge it may be intended to contact (line contact). Of the four side walls constituting the resin filling recess 1120 shown in FIGS. 3 to 5, if attention is paid to the outer surface of one side wall, the electricity storage device 1200 in the height direction at two edge portions of the outer surface (lines constituting the vertical edge portions of both ends) together with contact with, is fixed by a resin by a longitudinally elongated slit-shaped through hole 1130 between the center of the two edge portions. Thus, each of the electricity storage device 1200 by the side wall outer surface of the four resin filling recess 1120 disposed around, it may be intended to be held and fixed. Further, as can be understood from FIG. 4, the position where the outer surface of the side wall constituting the electricity storage device 1200 and the resin filling recess 1120 to be sandwiched abuts, the head top side 1/2 of the height of the electricity storage device 1200 resin filling recess so as to be within the range is configured. Specifically, when the electricity storage device 1200 is a capacitor which is a typical example, the most heat-generating portion is 1/2 or a central portion when the height dimension of the capacitor is 1 (although the lead terminal length is not included), the central portion near and its lower portion is exposed so as not to abut the side wall outer surface it is more preferable to maintain the cooling efficiency.

Further, FIG. 6 is a plan view for explaining the rib 1140 which contributes to the structural strength strengthening of the electricity storage device holder 1100 with guiding the arrangement of the resin at the time of resin filling to the resin filling recess 1120. As can be understood from FIG. 6, the electricity storage device housing unit 1110 in each line in the x-axis direction and the y-axis direction are linearly arranged, respectively to form a plurality of lines have already been described.

Then, in FIG. 6, the space corresponding to the arrangement gap of the plurality of electricity storage device housing unit 1110, the resin filling recess 1120 is disposed. As shown in Fig. 6, the concave portion 1120 for resin filling has a shape of an approximately quadrangular pillar top surface is opened, the sidewall four sides are provided with a through-bore 1130 for each filling resin to closely or/or glue with the electricity storage device 1200, and the through-bore 1130 is typically vertical slit-shaped.

Further, in FIG. 6, a plurality of first ribs 1140 (1) in the oblique direction of the paper surface lower right direction from the upper left of the paper surface, just electricity storage device housing unit 1110 and the resin filling recess 1120 It is provided by projecting and alternately curved by a predetermined height upward (paper front side) so as to partition between. Similarly, a plurality of second ribs 1140 (2) in the oblique direction of the lower left direction of the paper surface from the paper surface right, just electricity storage device housing unit 1110 and the resin filling recess 1120 It is provided to protrude upward (the paper front side) and alternately curved so as to partition between. The first rib 1140 (1) and the second rib 1140 (2) are collectively referred to as appropriate ribs 1140.

Rib 1140 has a function of partition walls and guides to prevent the resin to be filled in the resin filling recess 1120 from protruding or spilled into the electricity storage device housing unit 1110 or the like adjacent.

If there is no partition wall-shaped rib 1140 protruding arbitrarily predetermined height upward, the resin to be filled into the resin filling recess 1120, the filling operation or the like since a situation that overflows to the adjacent portion is also feared, very precise and precise filling amount control and filling position control is essential. However, since the rib 1140 has a partition wall function, since a certain degree of control error is also allowed, the throughput and productivity in the actual production site or the like is improved.

Further, the rib 1140 is intended to make a large contribution from the viewpoint of structural strengthening of the electricity storage device holder 1100. That is, the ribs 1140 of the mesh-like wall structure overhanging above the head portion 1210 of the electricity storage device 1200 to be housed, so that the exact frame is formed above this becomes like a brace shape holding strength of the electricity storage device holder 1100 is greatly improved. Furthermore, by having a partition wall structure that protrudes upward to the same height as the rib 1140 even in the outermost peripheral wall of the electricity storage device holder 1100, the shape holding strength of the entire electricity storage device holder 1100 is maintained large.

In addition, the ribs 1140 are partitioned and of some thickness, but are not bulk, and thus contribute to weight reduction as a whole because of their non-bulk mesh structure, and can maintain space and air passage and ventilation space for the top 1210 of the electricity storage device 1200 to be air-cooled or the like. Furthermore, in FIG. 6, the rib 1140, by which is to be stretched in a slightly curved wavy shape, the shape strength becomes to be further increased, and it is possible to realize a space-saving.

That is, the slightly curved wavy shape, as can be understood from the field of view observation of FIG. 6, which bulges slightly resin filling recess 1120 side so as to widen the space of the electricity storage device holder 1100. Thus, it is possible to increase the space of the electricity storage device holder 1100 while slightly reducing the volume of the resin filling recess 1120. In other words, when securing the space of the same electricity storage device housing unit 1110, it leads to reduce the volume of the entire equivalent amount to reduce the volume of the resin filling recess 1120.

Further, as clearly shown in FIG. 6, in the edge of the electricity storage device holder 1100, it is assumed that the resin filling recess 1120 of 1/2 shape (substantially triangular shape) is provided. Also in this case, it is preferable that the through hole 1130 is disposed on the wall between the electricity storage device housing unit 1110.

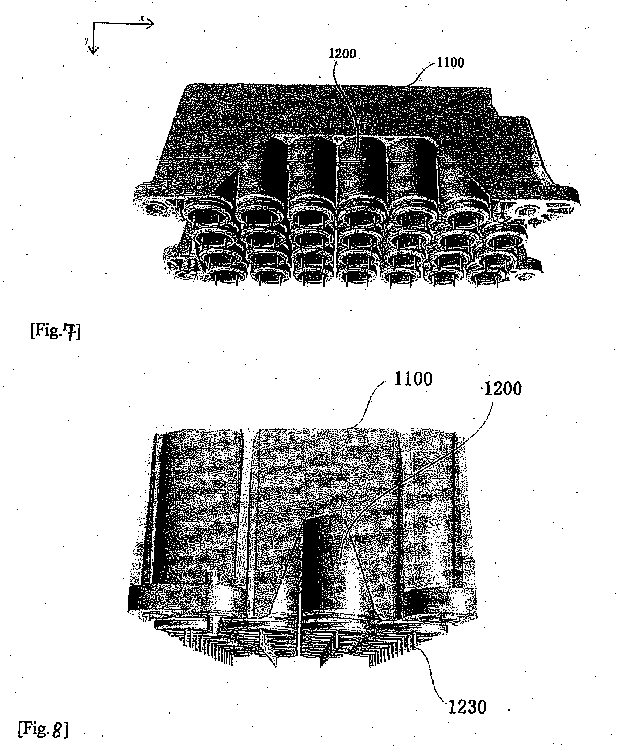

7 and 8 are diagrams illustrating a state of observing the bottom side of the electricity storage device module 1000 (the lead terminal 1230 side) from obliquely downward in order to explain the outline of the lower space formed with the arrangement state of the electricity storage device 1200. As can be understood from FIGS. 7 and 8, since the electricity storage device 1200 is intended to be held in the electricity storage device holder 1100 (and resin infiltrated from the through hole 1130) in the vicinity of the head top 1210 of the side surface thereof, the central vicinity and near the bottom of the side surface is exposed rather than being held at all in the electricity storage device module 1000.

Therefore, in particular it is easy to be cooled by air cooling in the vicinity of the center of the side surface is a heat generating portion, and FIG. 7, the passage path of the air as shown in FIG. 8 is to be secured in a line so that the air cooling efficiency is high.

That is, by the arrangement of the electricity storage device 1200 is arranged in a plurality of lines in a straight line, it becomes possible to see a straight space between the lines, so that greatly contribute to air cooling. Moreover, since the foreseeable space portion is near the center of the side surface of the electricity storage device 1200 which is the main heat generating portion and a lower portion thereof, the cooling function is extremely high. Incidentally, the exposure of the electricity storage device 1200 as used herein, an exposure in the sense that it is not coated and contacted with the electricity storage device holder 1100 or a resin or the like, not necessarily the exposed exposure of the electricity storage device body It does not mean. The electricity storage device 1200 may be coated and protected in various cases or covers when mounted on the electricity storage device holder 1100 or a protective film or the like, even in a state of being housed and protected in the various cases and covers or the like, the electricity storage device holder 1100 as long as it is not in contact and coated, it can be understood that the exposure of the electricity storage device 1200 here.

Further, the place where the resin is accommodated in the above description, the resin filling recess 1120 for convenience of explanation has been illustrated and described as an exemplary example is not limited thereto, any configuration or the like as other resin housing portion may be adopted and applied. Further, the power electricity storage device housing unit 1110 and the resin storage unit of such an arbitrary configuration may be an electricity storage device holder each comprising a single, at least one of which may be a plurality of electricity storage device holder.

The electricity storage device module and the electricity storage device holder of the present invention is not limited to the configuration and method described in the above-described embodiment, suitably within the scope and within the technical concept of the present invention within the obvious range to those skilled in the art changing its configuration, it can be combined and applied.

### [Industrial Applicability]

The present invention is suitable for mounting modules of any number of electronic components exemplifying various electricity storage devices including capacitors.

### [Description of sign]

- 1000: electricity storage device module
- 1100: electricity storage device holder
- 1110: electricity storage device housing unit
- 1120: recess for resin filling
- 1130: through hole
- 1200: electricity storage device
- 1210: head top

## Claims

1. An electricity storage device holder **characterized in that** providing adjacent to each other, an electricity storage device housing unit for storing an electricity storage device and a resin storage unit for disposing resin,
wherein the resin storage unit and the electricity storage device housing unit, the electricity storage device holder spatially connected via a through hole.

2. The electricity storage device holder according to claim 1,
wherein the electricity storage device housing unit is disposed between the resin housing portion facing each other

3. The electricity storage device holder according to claim 1 or claim 2,
a plurality of said electricity storage device housing units are provided around said resin housing portion.

4. The electricity storage device holder according to any one of claims 1 to 3,
wherein the boundary between the electricity storage device housing unit and the resin housing portion has a rib provided to a specified height higher than the top of the electricity storage device to be mounted.

5. An electricity storage device module **characterized in that**,
the electricity storage device holder according to any one of claims 1 to 4,
wherein the electricity storage device housed in the electricity storage device housing unit,
comprising a resin disposed in the resin storage portion,
wherein the resin contacts the electricity storage device through the through hole, so that the electricity storage device is fixed to the electricity storage device holder.

6. The electricity storage device module according to claim 5,
wherein the position where the outer surface of the side wall of the electricity storage device and the resin housing portion abuts, when the height dimension of the electricity storage device is 1, so that the range within the head top side 1/2, the outer surface of the side wall is configured.

7. Method of manufacturing an electricity storage device module, **characterized in that**, in a method of manufacturing an electricity storage device module, the method concludes
a step of mounting the electricity storage device in the electricity storage device holder according to any one of claims 1 to 4,
and a step of fixing the electricity storage device holder and the electricity storage device with a resin.
